# EUROPEAN PATENT SPECIFICATION

(11) **EP 0 320 212 B1**
(45) Date of publication and mention of the grant of the patent: **24.02.1993**
(21) Application number: 88311547.9
(22) Date of filing: 06.12.1988
(51) Int. Cl.: A63B 57/00, G09F 3/00

(54) **Identification markers**
Identifikationszeichner
Marqueur d'identification

(30) Priority: 07.12.1987 US 129718
(43) Date of publication of application: 14.06.1989
(73) Proprietor: MARK 14 INNOVATIVE GOLF PRODUCTS LIMITED, Ambridge Pennsylvania 15003 (US)
(72) Inventor: Lockerman, Scott, G., Sewickley Pennsylvania 15143 (US); Dimmick, Gary S., Oakmont Pennsylvania 15139 (US)
(74) Representative: Cook, Anthony John

(56) References cited:
- US-A- 1 830 936
- US-A- 3 749 408
- US-A- 3 779 551
- US-A- 4 195 837
- US-A- 4 380 337

## Description

This invention relates to markers for identifying personal possessions and more particularly to devices for marking each golf club in a set of clubs with the telephone number and other information about the owner of the clubs, including with an identification marker for the putter a removable disc that may be utilized as a ball position indicator on the putting green.

Many efforts have been made to provide golf club identification markers which attach to, or are formed integrally with, the end of a golf club grip. In addition, efforts have been made to provide an attachment for a putter which has a removable portion that may be utilized as a golf ball position indicator on the putting green. Examples of devices to identify golf clubs which are affixed to the end of the club grip are disclosed in U.S. Patents 3,684,294 and 4,195,837. Examples of attachments to putter grips which have removable ball position indicators are disclosed in U.S. Patents 2,979,335 and 4,380,337 and British Patent 1,043,683. U.S. Patents 3,684,294 and 4,195,837 disclose golf apparatus that feature information displayed on the end of a golf club grip under a plastic protective cover. If the plastic protective cover is loosened from the grip, the information displayed will either be destroyed or lost. Other devices for holding spot markers on the ends of golf clubs are disclosed in U.S. Patents 2,700,547 and 2,261,959.

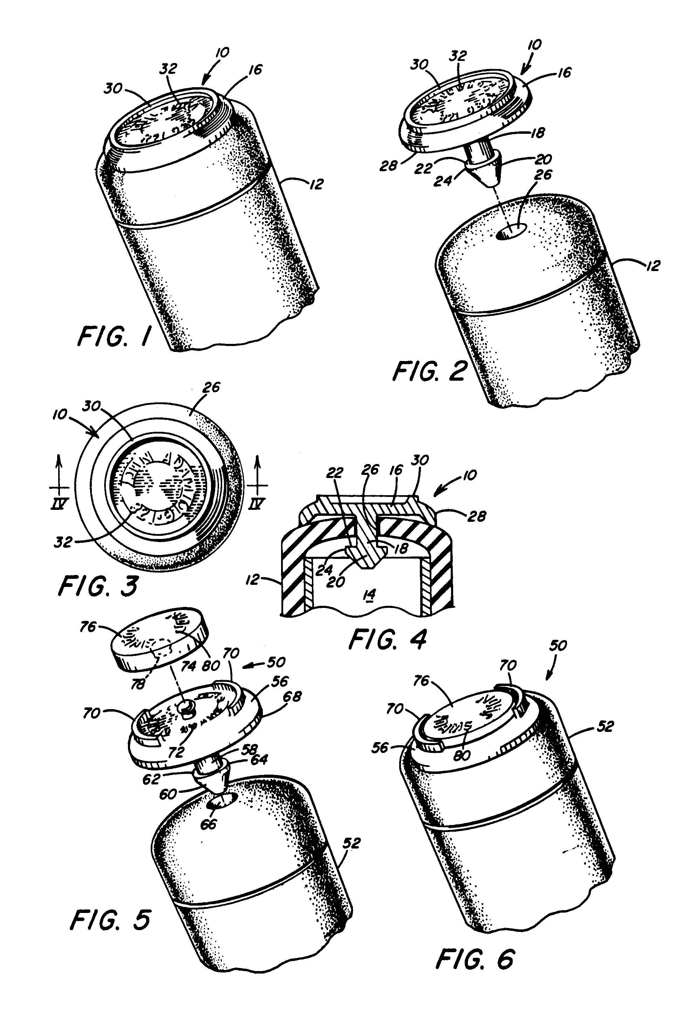

In U.S. Patent No. 3,779,551 there is disclosed an apertured end closure for use in a bat such as a baseball bat. An indication element (16 in Fig. 3 of the '551 patent) is inserted into the end of the bat handle. However this indicator element lacks a flange and a cylindrical surface adjacent a shoulder on the marker.

There is a need for apparatus for forming a matched set of golf club identification markers. While it has been suggested to provide indicators, the prior art devices do not present a solution to the need for efficiently and permanently identifying each golf club in a set of clubs.

In accordance with the present invention, there is provided an identification marker comprising, a unitary structure having a circular disc-like body with a top surface and a bottom surface, anchor means positioned on said disc-like body and arranged for connecting the marker to an object to be identified, characterised by a flange formed on the bottom surface of said disc-like body bottom surface and depending downwardly about the periphery of said body bottom surface in spaced annular relation to said anchor means whereby said flange in use contacts the object to be identified, and identification indicia engraved on said body top surface whereby said identification indicia becomes a permanent part of the object when said marker is affixed to the object.

In accordance with an embodiment of the present invention, there is provided a set of matching golf club identification markers for every golf club in the golf bag of a golfer, including the putter that includes a quanitary structure having a circular disc-like body. A cylindrical anchor member projects downwardly from the disc-like body. The anchor member has an enlarged conical head formed thereon with the apex of the conical head pointing away from the body bottom surface. The base of the conical head forms a shoulder extending perpendicularly outwardly from the cylindrical anchor member. The conical head has a short cylindrical surface immediately adjacent the shoulder. The anchor member has a diameter such that the anchor member fits snugly within the hold in the end of a golf club grip so that the enlarged conical head distorts the hole when the conical head is inserted through the hole and thereafter the shoulder formed by the conical head prevents removal of the anchor member from the grip. A flange is formed on the disc-like body member and depends downwardly about the periphery of the body bottom surface in spaced annular relation to the anchor member. The flange snugly contacts the end of the grip when the conical head of the anchor is inserted through the hole in the grip and retained in the grip. An upstanding protective collar is formed on the disc-like body top surface near the outer periphery of the body top surface. The protective collar is raised above the body for at least one-half the total circumference of the collar. Identification indicia are engraved on the top surface of the body within the area bounded by the protective collar whereby the identification indicia becomes a permanent part of the golf club grip when the marker is affixed to the grip.

Another embodiment of the present invention includes a two piece golf putter identification marker and ball position indicator having a circular disc-like body with a top surface and a bottom surface. An anchor member is formed on the bottom of the body and adapted to permanently connect the marker and ball position indicator to the end of the putter grip. An upstanding annular protective collar is formed on the body top surface near the outer periphery of the body top surface and defines a protected portion of the body top surface within the confines of the protective collar. The protective collar is discontinuous in at least two diametrically opposed positions on the collar. The collar is raised above the body top surface for at least one-half the total circumference of the collar. Identification indicia are engraved directly on the body top surface protected portion whereby the identification indicia becomes a permanent part of the putter grip when the marker and ball position indicator is connected to the end of the putter grip. A removable disc-like ball position indicator for indicating the position of a golf ball removed from the putting green has a top surface and a bottom surface with a diameter smaller than the diameter of the protective collar whereby the ball position indicator fits within the protective collar in juxtaposition to said body top surface protected portion. An indentation is formed within the ball position indicator bottom surface to receive the head of a snap fastener-like member. The head of a snap fastener-like member is formed on the top surface of the circular disclike body within the body top surface protected portion. The ball position indicator is removably secured to the body when the ball position indicator indentation is mated with the head on the body. The ball position indicator, the indentation, the head and the protective collar are all so dimensioned that when the ball position indicator is positioned on the body, the protective collar extends above the disc-like ball position indicator bottom surface and around the edge of the ball position indicator.

A matched set of golf club identification markers of the present invention can be attached to the ends of the golf club grips of every club in the golfer's bag. The marker for the putter has a removable golf ball position indicator.

In the accompanying drawings:-
Figure 1 is an isometric view of one golf club identification marker installed on the end of a golf club grip;
Figure 2 is an isometric view of the golf club identification marker positioned above a golf club grip prior to installation;
Figure 3 is a top plan view of the marker and grip shown in Figure 1;
Figure 4 is a sectional view taken along line IV-IV of Figure 3, illustrating the marker installed on the end of a golf club grip;
Figure 5 is an exploded isometric view of the putter identification marker and ball position indicator prior to installation on the end of the golf club grip;
Figure 6 is an isometric view of the identification marker and ball position installed on the end of the putter grip, illustrating the removable ball position indicator in place on the identification marker;
Figure 7 is a view similar to Figure 4, illustrating a marker having an enlarged conical head to increase the difficulty of removing the marker from the end of the golf club grip;
Figure 8 is an isometric view of the marker shown in Figure 7, illustrating removal of the marker from the club grip only after the hole is enlarged by cutting the grip;
Figures 9-12 illustrate an embodiment of the identification marker installed on the end of a bicycle grip;
Figures 13 and 14 illustrate an embodiment of the identification marker installed on the end of a tennis racket;
Figures 15 and 16 illustrate an embodiment of the identification marker installed on the end of a hammer;
Figures 17 and 18 illustrate an embodiment of the identification marker secured to a brief case;
Figures 19 and 20 illustrate an embodiment of the identification marker secured to the back of a chair;
Figures 21 and 22 illustrate an embodiment of the identification marker secured to a camera case; and
Figures 23 and 24 illustrate an embodiment of the identification marker secured to a portable radio.

Referring to the drawings, and particularly to Figures 1-4, there is shown a golf club identification marker 10 removably affixed to a golf club grip 12. As shown in Figure 4, the grip 12 is positioned over the golf club shaft 14 which is formed as a hollow metal of composite tube.

The marker 10 has a disc-like body 16 with a cylindrical anchor member 18 formed on the bottom surface thereof. The anchor member 18 has a conical head 20 formed on the end of the cylindrical anchor member 18. At the base of the conical head 20 an annular shoulder 22 extends radially from the anchor member 18. Adjacent to shoulder 22, the conical head 20 has a short cylindrical surface 24 which facilitates mounting of the identification marker 10 on the golf club grip 12 as will be described later in greater detail.

In conventional fashion, the golf club grip 12 has a vent hole 26 located in the top of the grip to permit the grip to be assembled onto the club and to facilitate drying of the adhesive which holds the grip 12 onto the shaft 14.

Referring to Figure 4 the disc-like body 16 of identification marker 10 has an annular depending flange 28. The flange 28 abuts the top of the golf club grip 12 when the marker 10 is affixed to the grip 12. On the top surface of the disc-like body 16, an upstanding annular protective collar 30 is formed about the periphery of the body 16. As shown in Figure 3, identification indicia 32 are engraved on the top of the marker 10 within the area protected by the protective collar 30. The identification indicia will include at least the telephone number of the owner of the club, as well as whatever other information is desired to be engraved upon the marker 10, such as the initials of the owner's name.

The marker 10 is preferably formed of a single piece of anodized aluminum since the light weight of the aluminum will not affect the swing characteristics of the golf club in any way. When the identification indicia 32 is engraved upon the anodized aluminum, the basic aluminum color shows through the colored anodized coating.

To affix the identification marker 10 shown in Figure 2 to the golf club grip 12, the conical head 20 is forced through the vent hole 26 in grip 12. The cylindrical anchor member 18 has a diameter such that anchor member 18 fits in tight frictional engagement with the vent hole 26 so that the marker 10 remains in place as shown in Figure 4. If desired, adhesive (not shown) may be placed between the flange 28 and the grip 12 to more securely retain the marker 10 in place. While the shoulder 22 formed on the conical head 20 prevents the conical head from passing back through the vent hole 26 when the club is inverted and stored in the golf bag, the head 20 can be forceably removed without tearing the material of the grip around the vent hole 66. With this arrangement the markers 10 can be moved from one club to another.

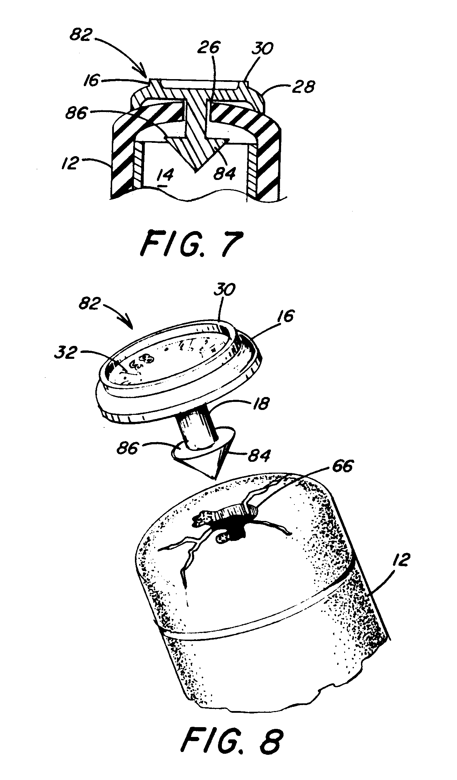

In another embodiment of the present invention as shown in Figures 7 and 8 a marker 82 is provided with the same features as the marker 10 shown in Figures 1-6 with the exception of a conical head 84 having greater dimensions in comparison with those of the head 20 of marker 10 shown in Figure 2. Specifically an annular shoulder 86 has an enlarged diameter which, while permitting the head 84 to be inserted in the hole 26 of the golf club grip 12, does not permit ready removal of the head 84 from the hole 26.

This is not the case with the embodiment of the conical head 20 shown in Figures 2 and 4 where the head 20 may be removed from the club grip hole 26 without damaging the grip 12. With the arrangement shown in Figures 7 and 8 the head 84 is of a size which prevents ready removal from the vent hole 26. Only by cutting or splitting the grip around the hole 26 to permit expansion of the material around the hole 26 can the head 84 be removed. In this manner the marker 82 shown in Figures 7 and 8 serves as a security device to deter theft of the golf club. The marker 82 can be removed from the golf club grip but to do so requires virtual destruction of the grip. This would necessitate replacement of the grip and present a substantial inconvenience which would serve to discourage theft of the golf club.

In the matched set of identification markers of the present invention, an identification marker and ball position indicator 50, as shown in Figures 5 and 6, has been provided for the putter. The marker and ball position indicator 50 is designed to be affixed to the putter grip 52. The marker and indicator 50 has a disclike body 56. A cylindrical anchor member 58 is formed on the bottom of the body 56 and an enlarged conical head 60 is formed on the end of the anchor member 58. The shoulder 62 on the conical head 60 extends radially outwardly from anchor member 58.

As earlier described in connection with marker 10, a short cylindrical surface 64 is provided adjacent to the shoulder 62. The vent hole 66 in the putter grip 52 receives the anchor member 58 in close frictional engagement after the conical head 60 is forced through the vent hold 52.

As in the marker 10 shown in Figures 1-4 a flange 68 (shown in Figure 5) similar to flange 28 is formed about the lower periphery of body 56. The flange 68 contacts the putter grip 52 when the marker and ball position indicator 50 is installed on the putter grip.

An annular protective collar 70 is formed on the top surface of body 56 but is discontinuous at diametrically opposed portions of the protective collar. Identification indicia 72 consisting of at least the telephone number of the owner of the putter is engraved within the area protected by the protective collar 70.

A snap fastener-like head 74 is formed on the top surface of body 56 to accommodate the removable disclike ball position indicator 76. Ball position indicator 76 has a recess 78 formed in the bottom surface thereof to mate with the snap fastener-like head 74 to thereby removably retain the ball position indicator 76 on the body 56. If desired, additional identification indicia 80, such as the initials of the golfer's name, may be placed on the top of the ball position indicator 76.

As seen in Figure 6, when the ball position indicator 76 is in position on the body 56, the protective collar 70 extends above the ball position indicator 76 and protects it from being knocked off the body 56. The discontinuity in the protective collar 70 permits the golfer to reach the edge of indicator 76 to thereby remove it from the body 56 when it is to be placed upon the putting green.

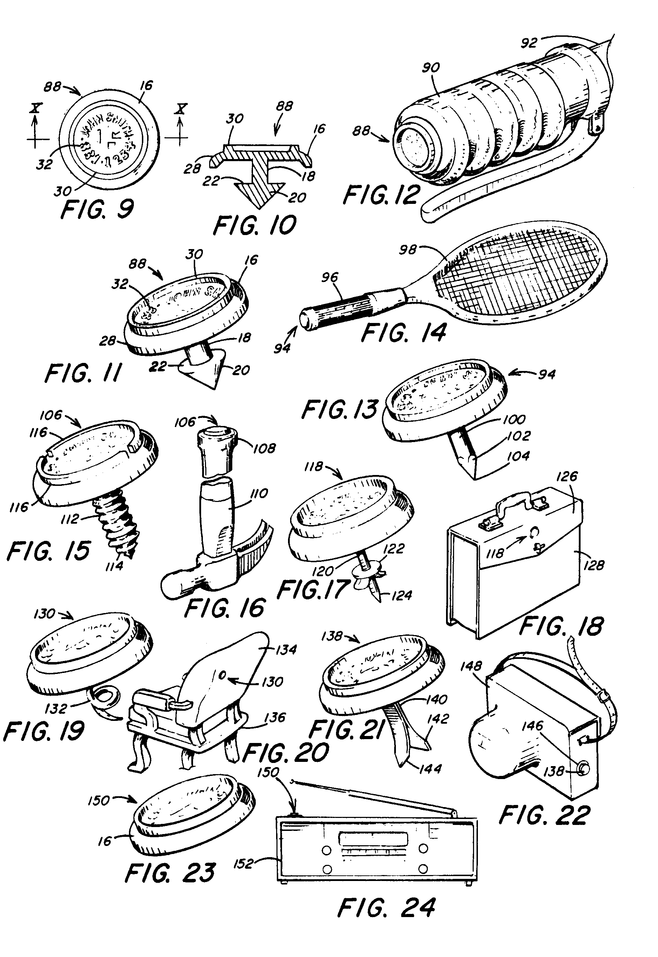

Now referring to Figures 9-24, there is illustrated the identification marker of the present invention used in a variety of applications for identifying individual items in comparison with the means for identifying the ownership of golf clubs as above discussed with reference to Figures 1-8. The various embodiments of the identification markers shown in Figures 9-24 have elements identified by like numerals for the identification marker 10 shown in Figures 1-4, where like parts shown in Figures 1-4 are identified by like numerals in Figures 9-24.

Now referring to Figures 9-12, there is shown an identification marker 88 having the disc-body 16 with the cyclindrical anchor member 18 which includes in this embodiment the conical head 20 formed on the end of the anchor member 18. As above discussed, the conical head 20 has an annular shoulder 22.

Further, as with the identification marker 10 shown in Figure 2, the identification marker 88 includes the protective collar 30 around the periphery of the body 16 with identification indicia 32, such as name and telephone number, engraved on the top of the marker 88 within the area protected by the collar 30. Most preferably the identification indicia includes at least a telephone number of the owner of the item to which the marker 88 is attached. In the specific example shown in Figure 12, the identification marker is inserted within the the hole (not shown) provided in the end of a grip 90 attached to the handlebars 92 of a bicycle or motorcycle. In this manner the owner of the bicycle is identified by the name and telephone number appearing on the identification marker 88.

In a similar manner identification marker 94 shown in Figure 13 is attached to the handle portion 96 of a tennis racket 98. The marker 94 shown in Figure 13 includes an anchor member 100 having a tapered end portion 102 that terminates in a point 104. With the point 104 marker 94 may be engaged into the material forming the tennis racket handle 96 as shown in Figure 14. Thus, the marker 94 serves to identify the owner of the tennis racket 98.

A similar approach to identifying an item of personal possession is shown in Figures 15 and 16 where identification marker 106 is secured to end 108 of hammer 110. The marker 106 includes an anchor member 112 having threads 114 thereon. In this manner the marker 106 can be threadedly engaged to the hammer handle 108. As shown in Figure 15, the marker 106 includes a annular protective collar 116 which is discontinuous at diametrically opposed portions in a manner similar to that shown for the marker in Figure 5. The discontinuity in the collar 116 facilitates the necessary threading of the anchor member 112 into the end of the hammer handle 108.

The identification marker 118 shown in Figure 17 is provided with a "tie clasp" type anchor member 120 having a closure member 122 releasably engageable with the tapered pin end portion 124. With the closure member 122 removed from the pin 124 the pin as shown in Figure 18 is inserted through the flap 126 of a briefcase 128. The pin is securely held in place by repositioning of the closure member 122 on the pin 124 in a conventional manner. Thus the identification marker 118 is securely attached to the briefcase 128.

Similarly attachments of the identification marker can be facilitated in a wide variety of means to other objects by selectively designing the configuration of the anchor member. In Figures 19 and 20 there is shown identification marker 130 having a corkscrew shaped anchor member 132 to facilitate connection of the marker 130 to the back 134 of a chair 136.

In Figure 21 identification marker 138 includes a bifurcated pin anchor member 140 having portions 142 and 144 that when in close adjacency are passed through an opening, such as an opening 146 in a camera case 148 shown in Figure 22. After the anchor member portions 142 and 144 are extended through the opening 146 they are spread apart to securely connect the identification marker 138 to the camera case 148.

With the embodiment of the identification marker 150 shown in Figure 23, the shaft-like anchor member is deleted and the connection of the marker 150 to an object, such as a portable radio 152, is accomplished by adhesively securing the disc-like body portion 16 to the portable radio. Removal of the marker 150 from the radio requires breaking the adhesive bond. This is not easily accomplished and requires prying the marker from the case of the radio, leaving an undesireable mark on the radio case. This has a deterring effect on theft of the item.

While Figures 9-24 illustrate a wide variety of means by which the identification marker can be secured to a personal item it should be understood that the present invention is not limited to the specific anchor means discussed above. Numerous alternatives for anchor means can be utilized to not only releasably secure the identification marker to an object but also to permanently secure the marker to an object in such a manner that damage to the personal item would be required to successfully remove the marker. In this manner the identification marker serves as a means to deter theft of the personal item.

## Claims

1. An identification marker (10) comprising:
a unitary structure having a circular disc-like body (16) with a top surface and a bottom surface,
anchor means (18) positioned on said disc-like body (16) and arranged for connecting the marker (10) to an object to be identified, characterised by,
a flange (28) formed on the bottom surface of said disc-like body (16) and depending downwardly about the periphery of said body bottom surface in spaced annular relation to said anchor means (18) whereby said flange (28) in use contacts the object to be identified, and
identification indicia (32) engraved on said body top surface whereby said identification indicia (32) becomes a permanent part of the object when said marker (10) is affixed to the object.

2. An identification marker (10) as claimed in claim 1 in which,
said anchor means (18) includes a member projecting downwardly from said disc-like body bottom surface and having an end portion (20) constructed to securely engage the object to be identified.

3. An identification marker (10) as claimed in claim 2 in which,
said anchor means end portion (20) is releasably engageable with the object to be identified.

4. An identification marker (10) as claimed in claim 1 in which,
said anchor means (18) includes an adhesive connection of said disc-like bottom surface to the object to be identified.

5. An identification marker (10) as claimed in claim 1 in which,
said anchor member (18) has an enlarged conical head (20) formed thereon with the apex of said conical head (20) pointing away from said body bottom surface and a base of said conical head (20) forming a shoulder (22) extending perpendicularly outwardly from said anchor member (18), and
said conical head (20) having a cylindrical surface (24) immediately adjacent said shoulder (22).

6. An identification marker (10) as claimed in claim 1 which includes,
an upstanding protective collar (30) formed on said disc-like body top surface near the outer periphery of said body top surface, and
said protective collar (30) being raised above said body (16) for at least one-half the total circumference of said collar (30).

7. An identification marker (10) as claimed in claim 6 wherein,
said protective collar (30) is raised above the said body top surface for the entire circumference of said collar (30).

8. An identification marker (10) as claimed in claim 6 wherein,
said protective collar (30) is raised above said body top surface for more than one-half the entire circumference of said collar (30) but substantially less than the entire circumference.

9. An identification marker (10) as claimed in claim 1, wherein,
said identification indicia (32) engraved on said body top surface includes the telephone number of the owner of the object to be identified.

10. An identification marker (10) as claimed in claim 1 wherein,
said unitary structure is formed from anodized aluminum.

11. An identification marker (10) as claimed in claim 1 which includes,
a golf club grip (12) having a hole (26) in one end thereof,
said anchor means (18) is formed on said body bottom surface from a cylinder (18) having the same diameter as the diameter of said hole (26) in the end of said golf club grip (12) projecting downwardly from said body bottom surface at the center of said body bottom surface,
an enlarged conical head (20) formed on the end of said cylinder (18) with the apex of said conical head (20) pointed away from said body bottom surface and the base of said conical head (20) forming an annular shoulder (22) extending perpendicularly outwardly from said cylinder (18), and
said conical head (20) having a cylindrical surface (24) immediately adjacent said shoulder (22).

12. An identification system (10) as claimed in claim 1 which includes,
an upstanding annular protective collar (70) formed on said body top surface near the outer periphery of said body top surface and defining a protected portion of said body top surface within the confines of said protective collar (70),
said protective collar (70) being discontinuous in at least two diametrically opposed positions on said collar (70) and said collar (70) being raised above said body top surface for at least one-half the total circumference of said collar (70),
said identification indicia (72) engraved directly on said body top surface protected portion.

13. An identification system (10) as claimed in claim 12 which includes,
a removable disc-like ball position indicator (76) for indicating the position of a golf ball removed from a putting green having a top surface and a bottom surface with a diameter smaller than the diameter of said protective collar (70) whereby said ball position indicator (76) fits within said protective collar (70) in juxtaposition to said body top surface protected portion,
a recess (78) formed within said ball position indicator bottom surface to receive the head of a snap fastenerlike member (74),
the head of a snap fastener-like member (74) formed on the top surface of said circular disc-like body (56) within said body top surface protected portion and adapted to removably secure said ball position indicator (76) to said body (56) when said ball position indicator recess (78) is mated with said head (74) on said body (56), and
said ball position indicator (76), said recess (78), said head (74) and said protective collar (70) being so dimensioned that when said ball position indicator (76) is positioned on said body (56), said protective collar (70) extends above said disc-like ball position indicator bottom surface and around the edge of said ball position indicator (76).

14. An identification system (10) as claimed in claim 1 which includes,
a resilient member (12) having a hole (66) therein,
said anchor means (18) extending from said disc-like body (16) and having a conical shape (80), and
said hole (66) being sized and shaped to permit insertion of said conical anchor means (18) such that removal of said conical anchoring means (18) results in permanent disfigurement of said resilient member (12).

15. An identification system (10) as claimed in claim 14 wherein said resilient member (12) is a grip (12) of a golf club.

16. An identification system (10) as claimed in claim 1 which includes,
a golf club having a resilient grip (12) attached thereto,
said grip (12) having a hole (66) therein,
said anchor means (18) adapted for insertion into the hole (66) of the grip (12),
said anchor means (18) having a conical shape (84); and
the hole (66) being sized and shaped to permit insertion of the conical anchor means (18) such that removal of said conical anchor means (18) results in permanent disfigurement of the resilient member (12).

## Patentansprüche

1. Identifikationsmarkiervorrichtung (10), die
eine einheitliche Struktur, die einen runden, scheibenartigen Körper (16) mit einer Oberseite und einer Unterseite hat, und eine
an diesem scheibenartigen Körper (16) angebrachte Verankerungseinrichtung (18), die zur Verbindung der Markiervorrichtung (10) mit einem zu kennzeichnenden Objekt angeordnet ist, umfaßt, gekennzeichnet durch
einen Flansch (28), der an der Unterseite des scheibenartigen Körpers (16) ausgebildet ist und der um den Umfang der Körperunterseite herum, in einem ringförmigen Abstand von der Verankerungseinrichtung (18) nach unten hängt, wodurch der Flansch (28) bei Verwendung das zu kennzeichnende Objekt berührt, und
Identifikationshinweise (32), die in die Körperoberseite eingraviert sind, wodurch diese Identifikationshinweise (32) ein fester Bestandteil des Objektes werden, wenn die Markiervorrichtung (10) an dem Objekt befestigt wird.

2. Identifikationsmarkiervorrichtung (10) nach Anspruch 1, bei welcher
die Verankerungseinrichtung (18) ein Teil einschließt, das nach unten aus der scheibenartigen Körperunterseite herausragt und das einen Endabschnitt (20) hat, welcher für das sichere Eingreifen in das zu kennzeichnende Objekt ausgebildet ist.

3. Identifikationsmarkiervorrichtung (10) nach Anspruch 2, bei welcher
der Endabschnitt (20) der Verankerungseinrichtung, lösbar mit dem zu kennzeichnenden Objekt verbindbar ist.

4. ldentifikationsmarkiervorrichtung nach Anspruch 1, bei welchem die Verankerungseinrichtung (18) eine Klebeverbindung der scheibenartigen Unterseite mit dem zu kennzeichnenden Objekt einschließt.

5. ldentifikationsmarkiervorrichtung (10) nach Anspruch 1, bei welcher
die Verankerungseinrichtung (18) einen darauf ausgebildeten vergrößerten kegelförmigen Kopf (20) hat, wobei die Spitze dieses kegelförmigen Kopfes (20) von der Körperunterseite weggerichtet ist und wobei eine Basis dieses kegelförmigen Kopfes (20) einen Absatz (22) bildet, der sich senkrecht von der Verankerungseinrichtung (18) nach außen hin erstreckt, und
der kegelförmige Kopf (20) eine zylindrische Oberfläche (24) hat, die unmittelbar an den Absatz (22) angrenzt.

6. Identifikationsmarkiervorrichtung (10) nach Anspruch 1, welche
eine aufrecht stehende Schutzeinfassung (30), die auf der scheibenartigen Körperoberseite nahe dem äußeren Umfang der Körperoberseite ausgebildet ist, wobei
diese Schutzeinfassung (30) sich mindestens zur Hälfte des Gesamtumfanges der Einfassung (30) über den Körper (16) erhebt, einschließt.

7. Identifikationsmarkiervorrichtung (10) nach Anspruch 6, bei der
die Schutzeinfassung (30) sich über den gesamten Umfang der Einfassung (30) über die Körperoberseite erhebt ist.

8. Identifikationsmarkiervorrichtung (10) nach Anspruch 6, bei der
die Schutzeinfassung (30) sich mehr als zur Hälfte des Gesamtumfanges der Einfassung (30) aber wesentlich weniger als auf dem Gesamtumfang über die Körperoberseite hebt.

9. Identifikationsmarkiervorrichtung nach Anspruch 1, bei der
der in die Körperoberseite eingravierten Identifikationshinweise (32) die Telephonnummer des Eigentümers des zu kennzeichnenden Objekts einschließen.

10. Identifikationsmarkiervorrichtung (10) nach Anspruch 1, bei der
die einheitliche Struktur (10) aus eloxiertem Aluminium gebildet ist.

11. Identifikationsmarkiervorrichtung (10) nach Anspruch 1, welche
einen Golfschlägergriff (12) mit einem Loch (26) in einem Ende desselben umfaßt, wobei die Verankerungseinrichtung (18) an der Körperunterseite von einem Zylinder (18) gebildet ist, der den gleichen Durchmesser wie den Durchmesser des Loches (26) im Ende des Golfschlägergriffes (12) hat und in der Mitte der Körperunterseite aus der Körperunterseite nach unten herausragt, und
einen vergrößerten kegelförmigen Kopf (20) umfaßt, der am Ende des Zylinders (18) gebildet ist, wobei die Spitze des kegelförmigen Kopfes (20) von der Körperunterseite wegweist und wobei die Basis des kegelförmigen Kopfes (20) einen ringförmigen Absatz (22) bildet, der sich senkrecht von dem Zylinder (18) nach außen hin erstreckt, und wobei
der kegelförmige Kopf (20) eine zylindrische Oberfläche (24) hat, die unmittelbar an den Absatz (22) angrenzt.

12. Identifikationssystem (10) nach Anspruch 1, welches
eine erhobene ringförmige Schutzeinfassung (70), die auf der Körperoberseite nahe dem äußeren Umfang der Körperoberseite ausgebildet ist und die einen geschützten Teil der Körperoberseite innerhalb der Grenzen der Schutzeinfassung (70) begrenzt, einschließt,
wobei die Schutzeinfassung (70) an mindestens zwei diametral gegenüberliegenden Positionen der Einfassung (70) unterbrochen ist und die Einfassung (70) sich zumindest zur Hälfte des Gesamtumfanges der Einfassung (70) über die Körperoberseite hinaus erhebt,
und bei der die Identifikationshinweise (72) direkt auf den geschützten Teil der Körperoberseite eingraviert sind.

13. Identifikationssystem (10) nach Anspruch 12, welches
einen abnehmbaren scheibenartigen Anzeiger für die Ballposition (76) zum Anzeigen der Position eines von einem Putting-Green entfernten Golfballes, der eine Oberseite und eine Unterseite mit einem Durchmesser hat, der kleiner ist als der Durchmesser der Schutzeinfassung (70), wodurch der Anzeiger für die Ballposition (76) neben dem geschützten Teil der Körperoberseite liegend in die Schutzeinfassung (70) paßt,
eine Aussparung (78), die innerhalb der Unterseite des Anzeigers für die Ballposition ausgebildet ist, um den Kopf eines druckknopfartigen Mittels (74) aufzunehmen,
den Kopf einer drudkknopfartigen Einrichtung (74), die auf der Oberseite des runden scheibenartigen Körpers (56) innerhalb des geschützten Teils der Körperoberseite ausgebildet ist und angepaßt ist, um den Anzeiger für die Ballposition (76) an dem Körper (56) lösbar zu befestigen, wenn die Aussparung für den Anzeiger für die Ballposition (78) mit dem Kopf (74) auf dem Körper (56) zusammengepaßt wird, einschließt, wobei
der Anzeiger für die Ballposition (76), die Aussparung (78), der Kopf (74) und die Schutzeinfassung (70) so bemessen sind, daß wenn der Anzeiger für die Ballposition (76) auf dem Körper (56) angebracht wird, die Schutzeinfassung (70) sich über die scheibenartige Unterseite des Anzeigers für die Ballposition und um die Kante des Anzeigers für die Ballposition (76) herum erstreckt.

14. Identifikationssystem (10) nach Anspruch 1, welches
eine elastische Einrichtung (12) mit einem darin befindlichen Loch (66),
die Verankerungseinrichtung (18), die sich von dem scheibenartigen Körper (16) aus erstreckt und die Form eines Kegels (80) hat, und
das Loch (66), das so dimensioniert und geformt ist, daß es das Einführen der kegelförmigen Verankerungseinrichtung (18) derart gestattet, daß die Entfernung der kegelförmigen Verankerungseinrichtung (18) eine andauernde Verunstaltung der elastischen Einrichtung (12) ergibt, einschließt.

15. Identifikationssystem (10) nach Anspruch 14, bei dem die elastische Einrichtung (12) ein Griff (12) eines Golfschlägers ist.

16. Identifikationssystem (10) nach Anspruch 1, welches
einen Golfschläger mit daran angebrachtem elastischen Griff (12) besitzt,
wobei sich in dem Griff (12) ein Loch (66) befindet,
die Verankerungsvorrichtung (18) für das Einführen in das Loch (66) des Griffs (12) angepaßt ist,
die Verankerungseinrichtung (18) in Kegelform (84) hat, und
das Loch (66) so dimensioniert und geformt ist, daß es die Einführung der kegelförmigen Verankerungseinrichtung (18) derart gestattet, daß die Entfernung der kegelförmigen Verankerungseinrichtung (18) eine andauernde Verunstaltung der elastischen Einrichtung (12) ergibt.

## Revendications

1. Marqueur d'identification (10) comprenant :
une structure unitaire ayant un corps circulaire en forme de disque (16) avec une face supérieure et une face inférieure ;
un moyen d'ancrage (18) placé sur ledit corps en forme de disque (16) et conçu pour relier le marqueur (10) à un objet à identifier ; caractérisé par :
un rebord (28) formé sur la face inférieure dudit corps en forme de disque (16) et pendant vers le bas le long de la périphérie de ladite face inférieure de corps dans une disposition annulaire espacée par rapport audit moyen d'ancrage (18), ce par quoi ledit rebord (18) en utilisation vient en contact de l'objet à identifier ; et par,
une inscription d'identification (32) gravée sur ladite face supérieure de corps, ce par quoi ladite inscription d'identification (32) devient une partie permanente de l'objet lorsque ledit marqueur (10) est fixé à l'objet.

2. Marqueur d'identification (10) selon la revendication 1, dans lequel,
ledit moyen d'ancrage (18) comprend un élément formant saillie vers le bas par rapport à ladite face inférieure de corps en forme de disque et ayant une partie extrémité (20) conçue pour s'enclencher de manière sûre avec l'objet à identifier.

3. Marqueur d'identification (10) selon la revendication 2, dans lequel,
ladite partie extrémité de moyen d'ancrage (20) peut être enclenchée de manière amovible avec l'objet à identifier.

4. Marqueur d'identification (10) selon la revendication 1, dans lequel,
ledit moyen d'ancrage (18) comporte une liaison par adhésif de ladite face inférieure en forme de disque à l'objet à identifier.

5. Marqueur d'identification (10) selon la revendication 1, dans lequel,
ledit élément d'ancrage (18) possède une tête conique (20) agrandie formée sur lui, la pointe de ladite tête conique (20) étant tournée vers l'extérieur par rapport à ladite face inférieure de corps, et une base de la tête conique (20) formant un épaulement (22) s'étendant perpendiculairement vers l'extérieur par rapport audit élément d'ancrage (18) ; et,
ladite tête conique (20) possédant une surface cylindrique (24) directement adjacente audit épaulement (22).

6. Marqueur d'identification (10) selon la revendication 1, qui comprend :
un collet protecteur (30) dressé vers le haut formé sur ladite face supérieure du corps en forme de disque près de la périphérie extérieure de ladite face supérieure de corps ; et,
ledit collet protecteur (30) étant surélevé au-dessus dudit corps (16) sur au moins la moitié de la circonférence totale dudit collet (30).

7. Marqueur d'identification (10) selon la revendication 6, dans lequel :
ledit collet protecteur (30) est surélevé au-dessus de ladite face supérieure de corps sur toute la circonférence dudit collet (30).

8. Marqueur d'identification (10) selon la revendication 6, dans lequel :
ledit collet protecteur (30) est surélevé au-dessus de ladite face supérieure de corps sur plus de la moitié de la totalité de la circonférence dudit collet (30) mais sensiblement moins que la totalité de la circonférence.

9. Marqueur d'identification (10) selon la revendication 1,dans lequel :
ladite inscription d'identification (32) gravée sur ladite face supérieure de corps comprend le numéro de téléphone du propriétaire de l'objet à identifier.

10. Marqueur d'identification (10) selon la revendication 1, dans lequel :
ladite structure unitaire est faite d'aluminium anodisé.

11. Marqueur d'identification (10) selon la revendication 1, qui comprend :
une poignée de club de golf (12) comportant un trou (26) dans l'une de ses extrémités ;
dans lequel ledit moyen d'ancrage (18) est formé sur ladite face inférieure de corps à partir d'un cylindre (18) ayant le même diamètre que le diamètre dudit trou (26) dans l'extrémité de ladite poignée de club de golf (12), dépassant vers le bas de ladite face inférieure de corps au centre de ladite face inférieure de corps ;
comprenant une tête conique agrandie (20) formée à l'extrémité dudit cylindre (18), la pointe de ladite tête conique (20) étant dirigée vers l'extérieur de ladite face inférieure de corps et la base de ladite tête conique (20) formant un épaulement (22) s'étendant perpendiculairement vers l'extérieur dudit cylindre (18) ; et,
ladite tête conique (20) ayant une surface cylindrique (24) directement adjacente audit épaulement (22).

12. Système d'identification (10) selon la revendication 1, qui comprend :
un collet protecteur (70) dressé vers le haut formé sur ladite face supérieure du corps en forme de disque près de la périphérie extérieure de ladite face supérieure de corps, et définissant une partie protégée de ladite face supérieure de corps à l'intérieur des limites du collet protecteur (70) ;
ledit collet protecteur (70) étant discontinu dans au moins deux positions diamétralement opposées sur ledit collet (70) et ledit collet (70) étant surélevé au-dessus de la face supérieure de corps sur au moins la moitié de la circonférence totale dudit collet (70) ;
ladite inscription d'identification (72) étant gravée directement sur ladite partie protégée de la face supérieure de corps.

13. Système d'identification (10) selon la revendication 12, qui comprend :
un indicateur de position de balle (76) sous forme de disque amovible pour indiquer la position d'une balle de golf retirée du green possédant une face supérieure et une face inférieure avec un diamètre plus petit que le diamètre dudit collet protecteur (70), ce par quoi ledit indicateur de position de balle (76) s'ajuste dans ledit collet protecteur (70) de façon juxtaposée à ladite partie protégée de face supérieure de corps ;
un évidement (78) formé dans ladite face inférieure d'indicateur de position de balle pour recevoir la tête d'un élément du type bouton à pression (74) ;
la tête de l'élément du type bouton à pression (74) étant formée sur la face supérieure dudit corps circulaire en forme de disque (56) dans ladite partie protégée de face supérieure de corps, et conçue pour fixer de manière amovible ledit indicateur de position de balle (76) audit corps (56) lorsque ledit évidement d'indicateur de position de balle (78) est accouplé avec ladite tête (74) sur ledit corps (56) ; et,
ledit indicateur de position de balle (76), ledit évidement (78), ladite tête (74) et ledit collet protecteur (70) étant dimensionnés de telle façon que lorsque ledit indicateur de position de balle (76) est placé sur ledit corps (56), ledit collet protecteur (70) s'étend au-dessus de ladite face inférieure d'indicateur de position de balle en forme de disque et autour du bord dudit indicateur de position de balle (76).

14. Système d'identification (10) selon la revendication 1, qui comprend :
un élément élastique (12) comportant à l'intérieur un trou (66) ;
ledit moyen d'ancrage (18) s'étendant à partir dudit corps en forme de disque (16) et ayant une forme conique (80) ; et,
ledit trou (66) étant dimensionné et conformé pour permettre l'introduction dudit moyen d'ancrage conique (18) de telle manière que le retrait dudit moyen d'ancrage conique (18) ait pour résultat une détérioration permanente dudit élément élastique (12).

15. Système d'identification (10) selon la revendication 14, dans lequel ledit élément élastique (12) est une poignée (12) d'un club de golf.

16. Système d'identification (10) selon la revendication 1, qui comprend :
un club de golf ayant une poignée élastique (12) qui y est fixée ;
ladite poignée (12) comportant à l'intérieur un trou (66) ;
ledit moyen d'ancrage (18) étant conçu pour introduction dans le trou (66) de la poignée (12) ;
ledit moyen d'ancrage (18) ayant une forme conique (84) ; et,
le trou (66) étant dimensionné et conformé pour permettre l'introduction dudit moyen d'ancrage conique (18) de telle manière que le retrait dudit moyen d'ancrage conique (18) ait pour résultat une détérioration permanente dudit élément élastique (12).
